# EUROPEAN PATENT SPECIFICATION

(11) **EP 0 941 264 B1**
(45) Date of publication and mention of the grant of the patent: **11.07.2001**
(21) Application number: 97913329.5
(22) Date of filing: 24.11.1997
(51) Int. Cl.: C08G 18/69, C08G 18/62, C09J 175/04, C09J 123/34, B29D 30/52, B60C 1/00

(54) **ADHESIVE**
KLEBSTOFF
ADHESIF

(30) Priority: 27.11.1996 GB 9624579; 31.05.1997 GB 9711144
(43) Date of publication of application: 15.09.1999
(73) Proprietor: Compounding Ingredients Limited, Preton, Lancashire PR5 8AQ (GB)
(72) Inventor: WORTHINGTON, Keith, Shropshire SY13 1EP (GB); GOMBERG, Edward, Nicholas, Laguna Niguel, CA 92677 (US)
(74) Representative: McNeight, David Leslie
(86) International application number: GB9703213
(87) International publication number: WO9823660

(56) References cited:
- EP-A- 0 209 512
- GB-A- 2 270 888
- US-A- 3 830 784
- US-A- 4 581 092

## Description

This invention relates to adhesives, particularly, but not exclusively to adhesives for bonding elastomers such as polyurethane, particularly to rubber, and to the manufacture of automobile tyres and retreads using such adhesives.

Currently, retread tyres are made either by moulding a new rubber tread directly on to a buffed tyre casing or by bonding a pre-formed rubber tread on to the casing. Rubber treads have a limited life (hence retreads) though reasonably hardwearing and durable, and alternative materials having better performance are sought.

Polyurethane is an ideal substitute. However, although polyurethane tread has been bonded to a rubber substrate, the bonding has proved unsatisfactory, with high failure rate and low dynamic fatigue resistance not to mention inadequate temperature resistance - tyres get hot when working. Commercially available polyurethane/rubber cements have low tack and low green strength. Tacky adhesives - so-called tack coat or tie coat - have achieved only limited success.

GB-A 2 270 888 discloses a tyre tread comprising a polyurethane casting with a rubber coating bonded thereto with an adhesive. The adhesive may be a two part adhesive comprising ChS and a liquid hDI.

In particular no method for attachment of polyurethane tread to rubber tyre casing has been disclosed to date which is capable of meeting high European and US technical standards for dynamic fatigue resistance and heat resistance.

The present invention provides an adhesive for polyurethane and indeed for other elastomers which is capable of meeting those standards and moreover provides a polyurethane/rubber bonded system which produces tyres having good overall heat and dynamic fatigue resistance.

The invention comprises an adhesive for bonding elastomers with improved dynamic fatigue resistance comprising an halogenated polymer which can be cured and stabilised and which contains isocyanate with a functionality between 2.1 and 2.6.

By "adhesive" is meant to be understood also a bonding agent or coating for incorporation into a bonding process in any convenient manner.

The adhesive may comprise a one part adhesive, which may comprise a chlorinated or brominated polymer and a curing agent, which may comprise p-dinitrosobenzene (DNSB).

The polymer may be chlorinated or brominated rubber, CSM, partly halogenated butadiene polymers, halogenated polyurethane or mixtures of the aforementioned polymers. Of particular interest are highly chlorinated Diels-Alder adducts of hexachlorocyclobutadiene or hexachlorocyclopentadiene and dienophiles such as polybutadiene, butadiene copolymers and isoprene polymers.

Of course, the adhesive may also be presented as a two-part adhesive.

The adhesive may comprise an adhesion promoter, which may be adapted to achieve initial cure to the polyurethane elastomer and the rubber coating from the heat output by the exothermic reaction. This could eliminate the need to post-cure the composite polyurethane tread and facilitate continuous processing.

The isocyanate may comprise a part-polymerised diisocyanate, or a quasi-prepolymer made from branched polyols and pure diphenyl-methane diisocyanate (MDI) or a quasi-prepolymer made from partially polymerised diisocyanates and polyols.

The isocyanate content of the isocyanate molecule may be between 8 and 33%.

The invention also comprises a method for bonding elastomer such as polyurethane with improved dynamic fatigue resistance using an adhesive, bonding agent or coating as specified above.

The method may be used to bond an elastomer such as polyurethane of which the polyol has an overall functionality between 2.07 and 2.3. The isocyanate of the elastomer may have a functionality between 2.0 and 2.3.

Such an elastomer may be thus bonded to a rubber substrate with improved dynamic fatigue resistance and heat resistance sufficient to meet the standards referred to above for tyres, and the method may in particular be used to bond a polyurethane casting or moulding to a tyre. The casting or moulding may comprise a tread and/or a protective sidewall, useful in, for example, mining where conventional vehicle tyre sidewalls are often badly scuffed and damaged in narrow roadways and galleries. Not only retreads may be made in this way - the method is well adapted to the production of new tyres with improved performance over conventional all-rubber tyres.

Of course, many other items may be bonded. For example, polyurethane side walls may be bonded to rubber dinghies and rafts, especially those used in white water rafting and, in the production of fenders for marine use, particularly for harbour installations and road barriers, where the resilience of the rubber is combined with the hardwearing nature, durability and resistance to corrosion of the polyurethane. The invention is primarily of importance, however, where dynamic fatigue resistance, possibly combined with heat resistance, is a requirement.

The elastomer may in any event comprise a polyurethane elastomer with a hardness range from 50° to 95° Shore A, preferably 60° to 75° Shore A.

The elastomer may be injection moulded by a high or a low pressure technique, especially for a tyre tread, or it may be cast.

The elastomer may be only partially cured or may be post cured before bonding.

The elastomer may comprise an ester prepolymer or ester quasi-prepolymer or may comprise a polycaprolactone prepolymer or a polycaprolactone quasi-prepolymer.

The elastomer may comprise a mixed diol adipate with a molecular weight between 1000 and 5000, preferably between 1500 and 2500.

The elastomer may comprise an ether prepolymer, or an ether quasi-prepolymer system.

The elastomer may comprise extender material such as reclaimed rubber crumb, rubber granules, rubber powder, polymeric fibres including polyurethane chopped fibres, and mineral fillers, which may be treated. Extender material may be present in an amount from 2 to 60% w/w of the polyurethane.

The polyurethane may, in particular, comprise reinforcing extenders which may include precipitated or fumed silicas, modified silicas where there may be reactive groups grafted onto the silica or the silica may be modified in terms of its hydrogen bonding capability.

One modification is to chemically graft a silica to the polyol backbone, where the polyol may be an ester, a caprolactone, an ether or polycarbonate using reactive silanes of the type containing epoxy groups, thiol groups, amine groups or other reactive groups.

The reaction is carried out using a high shear mixer in a heated reactor. The silica is dispersed in the polyol or part of the polyol mixture using high shear and the silane added. Heat is applied to 70-90°C and a catalyst or initiator added. After grafting for a required period, the mixture is vacuum stripped and then converted to the preferred polyurethane elastomer.

The level of silica in the polyol may be between 0% and 10% and the preferred range of silica is 5-10%. The level of silane on the silica may be up to 5% but the preferred level is 0.5-2.5% on the silica.

A rubber coating may be bonded to the elastomer and then bonded to a rubber substrate, such as a tyre carcass. The rubber coating may comprise a curable cushion gum or a solvent-based rubber solution.

The adhesive may cure and bond at a temperature between 60 and 130°C and curing and bonding may proceed for between 30 minutes and 3 hours.

The elastomer may be cured using a catalyst such as a heavy metal complex such as a tin mercaptide or another complex of tin, titanium, zirconium, iron, lead or mercury.

The elastomer may be cured using amine catalyst or combinations of amine catalysts and precious metal complexes.

Adhesives and adhesive/elastomer systems according to the invention will now be described with reference to the accompanying drawings, in which :
- Figure 1: shows a polyurethane tyre bonded to a rubber carcass;
- Figure 2: shows a sidewall of polyurethane bonded to a tyre;
- Figure 3: is a cross-section through a tread region of a tyre.

### Preparation of one part adhesive :

The one part adhesive is a cement, based on CSM chlorosulphonated polyethylene, other chlorinated polymers, particularly highly chlorinated Diels-Alder adducts of hexachlorocyclopentadiene and polybutadiene with a chlorine content above 50%, DNSB, carbon black and suitable solvents. Modified MDI of a narrow functionality range 2.1 to 2.6 is added to give an NCO content of between 3.5 and 7.0%.

The range of functionality is required to give the correct level of cross linking to the polyurethane and give the correct flexibility and hence dynamic fatigue resistance within the adhesive layer.

### Polyurethane elastomer preparation :

(a) a polyol blend was produced from the following ingredients a mixed glycol adipate polyester with a functionality of 2.07- 2.30 and a molecular weight of 1500 - 2000 and sufficient low weight molecular extender, such as butane diol, diethylene glycol, ethylene glycol or similar diols was used to give the correct hardness when cured with the MDI or an MDI quasi-prepolymer.
   The polyol blend was homogenised by mixing at an elevated temperature of up to 70°C under moderate vacuum conditions.
   A molecular sieve is used to absorb unwanted moisture and sufficient defoamers used to ensure bubble free castings.
(b) a quasi-prepolymer was made from a similar mixed glycol adipate and 4,4 diphenyl methane diisocyanate (MDI) by mixing under vacuum conditions at 70°C until the isocyanate (NCO) content stabilised at 15-33% NCO.
   The two components (a) and (b) were mixed in a ratio chosen to give NCO:OH equivalent ratio of between 0.98 and 1.05.
   It is important to ensure the NCO:OH equivalent ratio is maintained in the given range to guarantee the correct cross link density in the PU.

### EXAMPLE 1

A mixed diol (butane diol/ethylene glycol) adipate polyester was produced to a molecular weight of 2000 and a functionality of 2.15, using a triol as the branching mechanism. This polyester was converted into a 2 part PU system by making a quasi-prepolymer with pure MDI and a catalysed polyol component using catalyst and a molecular sieve and butane diol to control the hardness.

The 2 part MDI quasi ester polyurethane system as described above was metered mixed and cast into a flat mould to produce a tyre tread of the correct length and width for a commercial tyre size. The polyurethane yielded a 65 Shore A elastomer.

After demoulding and post curing to achieve maximum physical properties, the upper (flat surface) was buffed and solvent degreased using methyl ethyl ketone or toluene.

A coating of the one part adhesive (described above) was applied to the upper surface of the tread and allowed to dry.

An extruded cushion gum was applied to the adhesive using a roller technique and the whole assembly cured at 95 °C for 2 hours in a vacuum bag or under a low pressure heat platen to ensure that there was intimate contact between the cushion gum and the polyurethane.

This tread was packaged and used to build a precured retreaded tyre by the conventional method.

### EXAMPLE 2

A 2 part quasi MDI PU tread was produced as in Example 1. One coat of the one component adhesive was applied and dried. When dry a solution of the cushion gum in toluene and naphtha was applied to give a high build coating on top of the adhesive. When dry, the tread was packaged.

To a buffed casing a layer of extruded cushion gum was applied by the normal methods and the tread applied to this cushion gum coated buffed casing.

### EXAMPLE 3

A blend of mixed polycaprolactones of functionality 2.0 and a highly functional mixed diol/triol polycaprolactone was made to give an average functionality of 2.2.

A quasi-prepolymer was made from one of the above polycaprolactone polymers and pure MDI so that in the final polyurethane the polyester branching is approximately 2.10.

A one part, one coat adhesive was prepared in toluene and xylene from 16% brominated poly 2,3 dichloro polybutadiene CSM, highly chlorinated paraffin, 65% chlorinated polyisoprene, p-dinitrosobenzene (DNSB) and carbon black and a lead stabiliser. To this was added an isocyanate quasi-prepolymer based on MDI and a branched polyester giving a functionality of 2.3 and an isocyanate content of 12%. The amount of the isocyanate quasi-prepolymer added to the adhesive gave an isocyanate content of ca. 2.5%. Other curing agents were added to accelerate the cure of the adhesive.

The 2 part PU was machine mixed accurately to give an NCO/OH cure index of 1.02 and cast into a flat mould. When demoulded the upper flat surface was buffed and a single generous coat of the adhesive applied and fully dried. An extruded cushion gum was applied to the coated adhesive tread using pressure.

This tread was packaged and used to build a precured retreaded tyre by the conventional method.

### EXAMPLE 4

A grafted silica was produced in situ as follows:

50kg of a blend of PTMEG polyether of overall Mwt of ca. 2500, functionality of 2.17 and water content 0.1% was pumped into a reactor and heated to 70°C. Whilst shear stir mixing 3.5kg of standard fumed silica (typically Cabosil M5 or Aerosil 200) was added into the blend. Once fully dispersed as shown by Hegman Grind <5 micron, 65gm of thiol containing silane was added and the mixture stirred at 70°C for 3 hours.

The mixture was vacuum degassed to ≤0.05% water and made into a 2 part polyurethane with remaining 150kg of the PTMEG polyether blend, butane diol, molecular sieve and a mixed amine and tin catalyst added to control the reaction rate.

A quasi prepolymer was made from the same PTMEG polyether base and a pure MDI/dimerised MDI mixture to give a mobile liquid.

The one part, one coat adhesive from example 3 was used to coat a buffed tyre casing and the casing dried 15 minutes and then sited in a mould and the whole heated to 60°C in an oven prior to removal and injecting the PU system.

The two part PU as described above, was meter mixed at an NCO/OH index of 1.025 and injected at low pressure ≤2 bar into the mould and sealed. After 20 minutes the mould was opened and the retreaded tyre removed and post cured at ambient temperature for 4 days prior to use.

### EXAMPLE 5

A two part polyurethane as described in Example 3 was adjusted to give a mixed gel time of about 6 minutes. With this gel time the exotherm gives a temperature rise from 23 °C to about 70°C on the surface of a cast tread.

A two part adhesive was prepared. The resin component was made from a mixture of a 55% chlorine content Diels-Alder adduct of hexachlorocyclopentadiene and natural rubber and CSM in toluene and xylene stablised with a lead compound. To this was added carbon black and the whole mixture was finely ground.

The curing system was produced from a suitable solvent, DNSB, carbon black and a quasi prepolymer based on MDI and a branched polyether to give a functionality of 2.2 and an isocyanate content of 20% for the quasi prepolymer.

The two components were mixed in equal quantities by weight and used to apply to the cast tread.

The 2 part PU was machine mixed accurately to give an NCO/OH cure index of 1.03 and cast into a cold flat mould.

As soon as the PU had gelled and produced a solid surface the mixed 2-part adhesive was applied to the exothermed hot surface. Within one minute the surface was overcoated with a solution of cushion gum in toluene and naphtha, dried and packaged.

To a buffed casing, a layer of extruded cushion gum was applied by the normal methods and the tread applied to this cushion gum. Exposed cut ends of the PU tread were given a thin coating of the adhesive described in Example 3 and the two ends separated by a layer of cushion gum.

The tread was compressed onto the casing and the ends stapled prior to placing in a vacuum bag and curing as normal.

It is also possible to apply the extruded cushion gum to the PU tread after the application of the cushion gum solution and apply such a tread to a buffed casing which has been coated with a rubber tack cement.

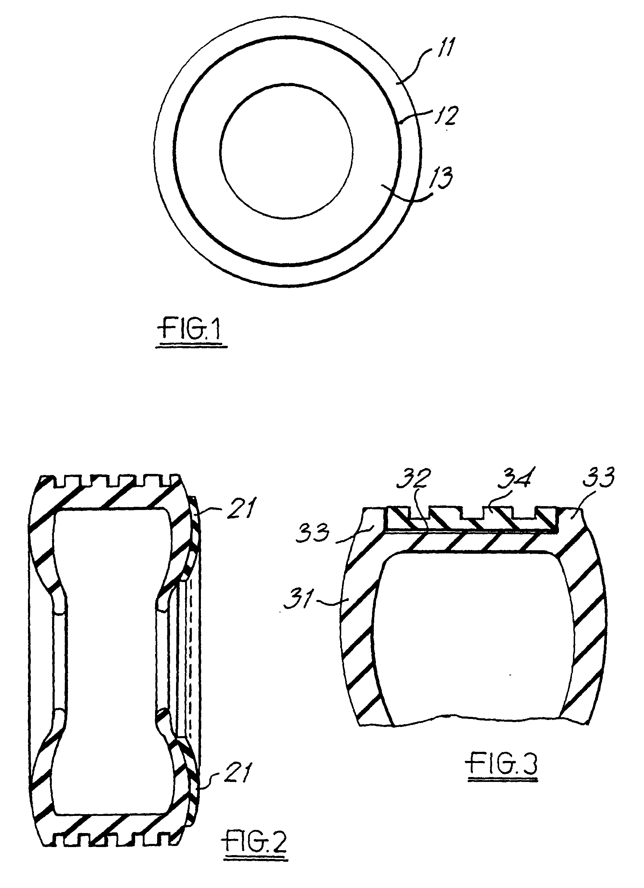

The drawings illustrate, in Figure 1, a polyurethane tyre tread 11 bonded to a rubber coating 12 which may be a curable cushion gum or a solvent-based rubber solution. This in turn is bonded as a normal rubber-to-rubber bond to the tyre carcass 13.

Figure 2 shows a side wall protector 21 bonded to a tyre, as may readily be achieved using the adhesive and methods of the invention.

Figure 3 shows a novel tyre design in which a rubber carcass 31 has an annular groove 32 between road-engaging rubber shoulders 33, a polyurethane tread 34 being bonded into the groove 32 using an adhesive and method as hereinbefore described.

## Claims

1. An adhesive for bonding elastomers with improved dynamic fatigue resistance comprising an halogenated polymer which can be cured and stabilised and which contains isocyanate with a functionality between 2.1 and 2.6.

2. An adhesive according to claim 1, of which the polymer is chlorinated.

3. An adhesive according to claim 1 or claim 2, of which the polymer is brominated.

4. An adhesive according to any one of claims 1 to 3, being a one-part adhesive.

5. An adhesive according to claim 4, comprising a chlorinated or brominated polymer and a curing agent.

6. An adhesive according to claim 5, in which the curing agent comprises p-dinitrosobenzene.

7. An adhesive according to claim 5 or claim 6, in which the polymer is chlorinated or brominated rubber.

8. An adhesive according to claim 5 or claim 6, in which the polymer is CSM.

9. An adhesive according to claim 5 or claim 6, in which the polymer comprises a partly halogenated butadiene polymer.

10. An adhesive according to claim 5 or claim 6, in which the polymer comprises a halogenated polyurethane.

11. An adhesive according to claim 5 or claim 6, in which the polymer comprises a mixture of two or more of chlorinated or brominated rubber, CSM, partly halogenated butadiene polymer, and halogenated butadiene.

12. An adhesive according to any one of claims 5 to 11, in which the polymer comprises at least one highly chlorinated Diels-Alder adduct of hexachlorocyclobutadiene or hexachlorocyclopentadiene.

13. An adhesive according to any one of claims 5 to 12, in which the polymer comprises a dienophile.

14. An adhesive according to claim 13, in which the dienophile comprises polybutadiene, a butadiene copolymer or an isoprene polymer.

15. An adhesive according to any one of claims 1 to 14 comprising an adhesion promoter.

16. An adhesive according to any one of claims 1 to 15, adapted to achieve initial cure from the heat output from an exothermic reaction.

17. An adhesive according to claim 16, in which the adhesion promoter is adapted to achieve the initial cure by exothermic reaction heat.

18. An adhesive according to any one of claims 1 to 17, in which the isocyanate comprises a part-polymerised diisocyanate.

19. An adhesive according to any one of claims 1 to 18, in which the isocyanate comprises a quasi-prepolymer made from branched polyols and pure diphenyl-methane diisocyanate (MDI).

20. An adhesive according to any one of claims 1 to 19, in which the isocyanate comprises a quasi-prepolymer made from partially polymerised diisocyanates and polyols.

21. An adhesive according to any one of claims 1 to 20, in which the isocyanate content of the isocyanate molecule is between 8 and 33%.

22. A method for bonding elastomers such as polyurethane with improved dynamic fatigue resistance comprising using an adhesive according to any one of claims 1 to 21.

23. A method for producing a bonded polyol - elastomer/substrate system such as a polyurethane/substrate system with improved dynamic fatigue resistance comprising using an adhesive according to any one of claims 1 to 21 and an elastomer such as polyurethane of which the polyol has an overall functionality between 2.07 and 2.3.

24. A method according to claim 22, in which the isocyanate of the elastomer has a functionality between 2.0 and 2.3.

25. A method according to any one of claims 22 to 24, in which the elastomer is bonded to a rubber substrate.

26. A method according to any one of claims 22 to 25, in which the elastomer is bonded to an elastomer substrate.

27. A method according to claim 26, used for bonding an elastomer (such as polyurethane) casting or moulding to a tyre.

28. A method according to claim 27, in which the casting or moulding comprises a tyre tread.

29. A method according to claim 27 or 28, in which the casting or moulding comprises a protective side-wall.

30. A tyre comprising a casting or moulding adhered to a carcass by an adhesive according to any one of claims 1 to 21 or by a method according to any one of claims 22 to 29.

31. A tyre according to claim 30, in which the casting or moulding comprises the tyre tread.

32. A tyre according to claim 31, in which the carcass has an annular groove between road-engaging shoulders and the cast or moulded tread is adhesively secured in the groove.

33. A tyre according to any one of claims 30 to 32, of which the carcass is of rubber and the tread is of polyurethane.

34. A method according to any one of claims 22 to 29, or a tyre according to any one of claims 30 to 33, in which the elastomer comprises a polyurethane elastomer in the hardness range 50°C Shore A to 95°C Shore A.

35. A method or a tyre according to claim 34, in which the elastomer is in the range 60° Shore A to 75° Shore A.

36. A method or a tyre according to any one of claims 22 to 35, in which the elastomer is injection moulded.

37. A method or a tyre according to any one of claims 22 to 36, in which the elastomer is only partly cured before bonding.

38. A method or a tyre according to any one of claims 22 to 37, in which the elastomer is post-cured before bonding.

39. A method or a tyre according to any one of claims 22 to 38, in which the elastomer comprises an ester prepolymer.

40. A method or a tyre according to any one of claims 22 to 39, in which the elastomer comprises a polycaprolactone prepolymer.

41. A method or a tyre according to any one of claims 22 to 40, in which the elastomer comprises a polyol with a molecular weight between 1000 and 5000.

42. A method or a tyre according to claim 41, in which the polyol comprises a mixed diol adipate.

43. A method or a tyre according to claim 42 in which the molecular weight is between 1500 and 2500.

44. A method or a tyre according to any one of claims 22 to 43, in which the elastomer comprises an ether prepolymer.

45. A method or a tyre according to any one claims 22 to 44, in which the elastomer comprises a quasi-prepolymer system.

46. A method or a tyre according to any one of claims 22 to 45, in which the elastomer comprises extender material.

47. A method or a tyre according to claim 46, in which the extender material is present in an amount between 2 and 60% w/w of the polyurethane.

48. A method or a tyre according to any one of claims 22 to 47, in which a rubber coating is bonded to the elastomer and is then bonded to a rubber substrate.

49. A method or a tyre according to claim 48, in which the rubber coating comprises a curable cushion gum.

50. A method or a tyre according to claim 49, in which the rubber coating comprises a solvent-based rubber solution.

51. A method or a tyre according to any one of claims 27 to 50, in which the adhesive cures and bonds at a temperature between 80 and 130°C.

52. A method or a tyre according to any one of claims 22 to 51, in which curing and bonding proceeds for between 30 minutes and 3 hours.

53. A method or a tyre according to any one of claims 22 to 52, in which the elastomer is cured using a catalyst.

54. A method or a tyre according to claim 53, in which the catalyst comprises a heavy metal complex.

## Patentansprüche

1. Klebstoff zum Verbinden von Elastomeren mit verbesserter dynamischer Dauerfertigkeit, der ein halogenisiertes Polymer aufweist, das gehärtet und stabilisiert werden kann und ein Isozyanat mit einer Funktionalität zwischen 2,1 und 2,6 enthält.

2. Klebstoff nach Anspruch 1, bei dem das Polymer chloriert ist.

3. Klebstoff nach Anspruch 1 oder Anspruch 2, bei dem das Polymer bromiert ist.

4. Klebstoff nach einem der Ansprüche 1 bis 3, welcher ein Einkomponenten-Klebstoff ist.

5. Klebstoff nach Anspruch 4, welcher ein chloriertes oder bromiertes Polymer und ein Härtemittel aufweist.

6. Klebstoff nach Anspruch 5, in welchem das Härtemittel p-Dinitrosobenzol aufweist.

7. Klebstoff nach Anspruch 5 oder Anspruch 6, in welchem das Polymer chlorierter oder bromierter Gummi ist.

8. Klebstoff nach Anspruch 5 oder Anspruch 6, in welchem das Polymer CSM ist.

9. Klebstoff nach Anspruch 5 oder Anspruch 6, in welchem das Polymer ein teilweise halogenisiertes Butadien-Polymer ist.

10. Klebstoff nach Anspruch 5 oder Anspruch 6, in welchem das Polymer ein halogenisiertes Polyurethan aufweist.

11. Klebstoff nach Anspruch 5 oder Anspruch 6, in welchem das Polymer eine Mischung aus zwei oder mehr von chloriertem oder bromiertem Gummi, CSM, teilweise halogenisiertem Butadien-Polymer und halogenisiertem Butadien aufweist.

12. Klebstoff nach einem der Ansprüche 5 bis 11, in welchem das Polymer zumindest ein hochchloriertes Diels-Alder-Addukt von Hexachlorcyclobutadien oder Hexachlorcyclopentadien aufweist.

13. Klebstoff nach einem der Ansprüche 5 bis 12, in welchem das Polymer ein Dienophil aufweist.

14. Klebstoff nach Anspruch 13, in welchem das Dienophil Polybutadian, ein Butadien-Copolymer oder ein Isoprenpolymer aufweist.

15. Klebstoff nach einem der Ansprüche 1 bis 14, welcher einen Adhäsionsbeschleuniger aufweist.

16. Klebstoff nach einem der Ansprüche 1 bis 15, welcher geeignet ist, eine anfängliche Härtung durch die von einer exothermen Reaktion erhaltene Wärme zu erzielen.

17. Klebstoff nach Anspruch 16, in welchem der Adhäsionsbeschleuniger geeignet ist, die anfängliche Härtung durch exotherme Reaktionswärme zu erzielen.

18. Klebstoff nach einem der Ansprüche 1 bis 17, in welchem das Isozyanat ein teilpolymerisiertes Diisozyanat aufweist.

19. Klebstoff nach einem der Ansprüche 1 bis 18, in welchem das Isozyanat ein Quasi-Prepolymer aufweist, das aus verzweigten Polyolen und reinem Diphenylmethan-Diisozyanat (MDI) gebildet ist.

20. Klebstoff nach einem der Ansprüche 1 bis 19, in welchem das Isozyanat ein Quasi-Prepolymer aufweist, das aus teilpolymerisierten Diisozyanaten und Polyolen gebildet ist.

21. Klebstoff nach einem der Ansprüche 1 bis 20, in welchem der Isozyanatgehalt des Isozyanat-Moleküls zwischen 8 und 33% ist.

22. Verfahren zum Verbinden von Elastomeren wie Polyurethan mit verbesserter dynamischer Dauerfestigkeit, welches die Verwendung eines Klebstoffs gemäß einem der Ansprüche 1 bis 21 aufweist.

23. Verfahren zum Erzeugen eines verbundenen Polyol-Elastomer-Substratsystems wie einem Polyurethan-Substratsystem mit verbesserter dynamischer Dauerfestigkeit, welches die Verwendung eines Klebstoffs nach einem der Ansprüche 1 bis 21 und eines Elastomers wie Polyurethan, dessen Polyol eine Gesamtfunktionalität zwischen 2,07 und 2,3 hat, aufweist.

24. Verfahren nach Anspruch 22, bei welchem das Isozyanat des Elastomers eine Funktionalität zwischen 2,0 und 2,3 hat.

25. Verfahren nach einem der Ansprüche 22 bis 24, bei welchem das Elastomer mit einem Gummisubstrat verbunden wird.

26. Verfahren nach einem der Ansprüche 22 bis 25, bei welchem das Elastomer mit einem Elastomersubstrat verbunden wird.

27. Verfahren nach Anspruch 26, welches zum Verbinden eines Elastomer (wie Polyurethan)-Gußteils oder -Preßteils mit einem Reifen verwendet wird.

28. Verfahren nach Anspruch 27, bei welchem das Gußteil oder Preßteil eine Reifenlauffläche aufweist.

29. Verfahren nach Anspruch 27 oder 28, bei welchem das Gußteil oder Preßteil eine Schutzseitenwand aufweist.

30. Reifen mit einem Gußteil oder Preßteil, das mit einer Karkasse mittels eines Klebstoffs nach einem der Ansprüche 1 bis 21 oder gemäß einem Verfahren nach einem der Ansprüche 22 bis 29 verklebt ist.

31. Reifen nach Anspruch 30, bei welchem das Gußteil oder Preßteil die Reifenlauffläche aufweist.

32. Reifen nach Anspruch 31, bei welchem die Karkasse eine ringförmige Nut zwischen mit der Straße in Eingriff tretenden Schultern hat und die gegossene oder gepreßte Lauffläche klebend in der Nut befestigt ist.

33. Reifen nach einem der Ansprüche 30 bis 32, bei welchem die Karkasse aus Gummi und die Lauffläche aus Polyurethan bestehen.

34. Verfahren nach einem der Ansprüche 22 bis 29 oder Reifen nach einem der Ansprüche 30 bis 33, bei welchem das Elastomer ein Polyurethan-Elastomer in dem Härtebereich 50°C Shore A bis 95°C Shore A aufweist.

35. Verfahren oder Reifen nach Anspruch 34, bei welchem das Elastomer in dem Bereich 60° Shore A bis 75° Shore A ist.

36. Verfahren oder Reifen nach einem der Ansprüche 22 bis 35, in welchem das Elastomer durch Spritzguß hergestellt ist.

37. Verfahren oder Reifen nach einem der Ansprüche 22 bis 36, in welchem das Elastomer vor dem Verbinden nur teilweise gehärtet ist.

38. Verfahren oder Reifen nach einem der Ansprüche 22 bis 37, bei welchem das Elastomer vor dem Verbinden nachgehärtet wird.

39. Verfahren oder Reifen nach einem der Ansprüche 22 bis 38, bei welchem das Elastomer ein Ester-Prepolymer aufweist.

40. Verfahren oder Reifen nach einem der Ansprüche 22 bis 39, bei welchem das Elastomer ein Polykaprolekton-Prepolymer aufweist.

41. Verfahren oder Reifen nach einem der Ansprüche 22 bis 40, bei welchem das Elastomer ein Polyol mit einem Molekulargewicht zwischen 1000 und 5000 aufweist.

42. Verfahren oder Reifen nach Anspruch 41, bei welchem das Polyol ein gemischtes Diol-Adipat hat.

43. Verfahren oder Reifen nach Anspruch 42, bei welchem das Molekulargewicht zwischen 1500 und 2500 ist.

44. Verfahren oder Reifen nach einem der Ansprüche 22 bis 43, bei welchem das Elastomer ein Äther-Prepolymer aufweist.

45. Verfahren oder Reifen nach einem der Ansprüche 22 bis 44, bei welchem das Elastomer ein Quasi-Prepolymersystem aufweist.

46. Verfahren oder Reifen nach einem der Ansprüche 22 bis 45, bei welchem das Elastomer Streckmittel aufweist.

47. Verfahren oder Reifen nach Anspruch 46, bei welchem das Streckmittel in einer Menge zwischen 2 und 60% des Gewichts des Polyurethans vorhanden ist.

48. Verfahren nach einem der Ansprüche 22 bis 47, bei welchem eine Gummibeschichtung mit dem Elastomer und dann mit einem Gummisubstrat verbunden wird.

49. Verfahren oder Reifen nach Anspruch 48, bei welchem die Gummibeschichtung einen härtbaren Dämpfungsgummi aufweist.

50. Verfahren oder Reifen nach Anspruch 49, bei welchem die Gummibeschichtung eine auf einem Lösungsmittel basierende Gummilösung aufweist.

51. Verfahren oder Reifen nach einem der Ansprüche 27 bis 50, bei welchem der Klebstoff bei einer Temperatur zwischen 80 und 130°C aushärtet und verbindet.

52. Verfahren oder Reifen nach einem der Ansprüche 22 bis 51, bei welchem das Aushärten oder Verbinden während 30 Minuten bis 3 Stunden stattfindet.

53. Verfahren oder Reifen nach einem der Ansprüche 22 bis 52, bei welchem das Elastomer unter Verwendung eines Katalysators aushärtet.

54. Verfahren oder Reifen nach Anspruch 53, bei welchem der Katalysator einen Schwermetallkomplex aufweist.

## Revendications

1. Adhésif pour lier des élastomères à résistance à la fatigue dynamique améliorée comprenant un polymère halogéné qui peut être réticulé et stabilisé et qui contient un isocyanate ayant une fonctionnalité située entre 2,1 et 2,6.

2. Adhésif selon la revendication 1, dont le polymère est chloré.

3. Adhésif selon la revendication 1 ou la revendication 2, dont le polymère est bromé.

4. Adhésif selon l'une quelconque des revendications 1 à 3 qui est un adhésif en une partie.

5. Adhésif selon la revendication 4, comprenant un polymère chloré ou bromé et un agent de réticulation.

6. Adhésif selon la revendication 5, dans lequel l'agent de réticulation comprend du p-dinitrosobenzène.

7. Adhésif selon la revendication 5 ou la revendication 6, dans lequel le polymère est un caoutchouc chloré ou bromé.

8. Adhésif selon la revendication 5 ou la revendication 6, dans lequel le polymère est CSM.

9. Adhésif selon la revendication 5 ou la revendication 6, dans lequel le polymère comprend un polymère de butadiène partiellement halogéné.

10. Adhésif selon la revendication 5 ou la revendication 6, dans lequel le polymère comprend un polyuréthane halogéné.

11. Adhésif selon la revendication 5 ou la revendication 6, dans lequel le polymère comprend un mélange de deux ou plusieurs substances parmi un caoutchouc chloré ou brorné, CSM, un polymère de butadiène partiellement halogéné et un butadiène halogéné.

12. Adhésif selon l'une quelconque des revendications 5 à 11, dans lequel le polymère comprend au moins un produit d'addition de Diels-Alder hautement chloré de l'hexachlorocyclobutadiène ou de l'hexachlorocyclopentadiène.

13. Adhésif selon l'une quelconque des revendications 5 à 12, dans lequel le polymère comprend un diénophile.

14. Adhésif selon la revendication 13, dans lequel le diénophile comprend du polyburadiène, un copolymère de butadiène ou un polymère d'isoprène.

15. Adhésif selon l'une quelconque des revendications 1 à 14, comprenant un promoteur d'adhérence.

16. Adhésif selon l'une quelconque des revendications 1 à 15, conçu pour présenter une réticulation initiale sous l'effet de la chaleur dégagée par une réaction exothermique.

17. Adhésif selon la revendication 16, dans lequel le promoteur d'adhérence est conçu pour présenter la réticulation initiale sous l'effet de la chaleur d'une réaction exothermique.

18. Adhésif selon l'une quelconque des revendications 1 à 17, dans lequel l'isocyanate comprend un diisocyanate partiellement polymérisé.

19. Adhésif selon l'une quelconque des revendications 1 à 18, dans lequel l'isocyanate comprend un quasi-prépolymère préparé à partir de polyols ramifiés et de diisocyanate de diphénylméthane (MDI) pur.

20. Adhésif selon l'une quelconque des revendications 1 à 19, dans lequel l'isocyanate comprend un quasi-prépolymère préparé à partir de diisocyanates et polyols partiellement polymérisés.

21. Adhésif selon l'une quelconque des revendications 1 à 20, dans lequel la teneur en isocyanate de la molécule d'isocyanate est située entre 8 et 33 %.

22. Procédé pour lier des élastomères tels qu'un polyuréthane à résistance à la fatigue dynamique améliorée comprenant l'utilisation d'un adhésif selon l'une quelconque des revendications 1 à 21.

23. Procédé pour produire un système polyol-élastomère/substrat lié tel qu'un système polyuréthane/substrat à résistance à la fatigue dynamique améliorée comprenant l'utilisation d'un adhésif selon l'une quelconque des revendications 1 à 21 et d'un élastomère tel qu'un polyuréthane dont le polyol a une fonctionnalité globale située entre 2,07 et 2,3.

24. Procédé selon la revendication 22, dans lequel l'isocyanate de l'élastomère a une fonctionnalité située entre 2,0 et 2,3.

25. Procédé selon l'une quelconque des revendications 22 à 24, dans lequel l'élastomère est lié à un substrat en caoutchouc.

26. Procédé selon l'une quelconque des revendications 22 à 25, dans lequel l'élastomère est lié à un substrat en élastomère.

27. Procédé selon la revendication 26 utilisé pour lier un élément coulé ou moulé en élastomère (tel qu'un polyuréthane) à un pneumarique.

28. Procédé selon la revendication 27, dans lequel l'élément coulé ou moulé comprend une bande de roulement de pneumatique.

29. Procédé selon la revendication 27 ou 28, dans lequel l'élément coulé ou moulé comprend une paroi latérale protectrice.

30. Pneumatique comprenant un élément coulé ou moulé amené à adhérer à une carcasse au moyen d'un adhésif selon l'une quelconque des revendications 1 à 21 ou par un procédé selon l'une quelconque des revendications 22 à 29.

31. Pneumatique selon la revendication 30, dans lequel l'élément coulé ou moulé comprend la bande de roulement du pneumatique.

32. Pneumatique selon la revendication 31, dans lequel la carcasse a une rainure annulaire entre des épaulements venant en contact avec la chaussée et la bande de roulement coulée ou moulée est fixée de manière adhésive dans la rainure.

33. Pneumatique selon l'une quelconque des revendications 30 à 32 dont la carcasse est en caoutchouc et la bande de roulement est en polyuréthane.

34. Procédé selon l'une quelconque des revendications 22 à 29 ou pneumatique selon l'une quelconque des revendications 30 à 33, dans lequel l'élastomère comprend un élastomère de polyuréthane dans le domaine de dureté de 50°C Shore A à 95°C Shore A.

35. Procédé ou pneumatique selon la revendication 34, dans lequel l'élastomère est dans le domaine de 60° Shore A à 75° Shore A.

36. Procédé ou pneumatique selon l'une quelconque des revendications 22 à 35, dans lequel l'élastomère est moulé par injection.

37. Procédé ou pneumatique selon l'une quelconque des revendications 22 à 36, dans lequel l'élastomère est réticulé seulement partiellement avant la liaison.

38. Procédè ou pneumatique selon l'une quelconque des revendications 22 à 37, dans lequel l'élastomére est post-réticulé avant la liaison.

39. Procédé ou pneumatique selon l'une quelconque des revendications 22 à 38, dans lequel l'élastomère comprend un prépolymère d'ester.

40. Procédé ou pneumatique selon l'une quelconque des revendications 22 à 39, dans lequel l'élastomère comprend un prépolymère de polycaprolactone.

41. Procédé ou pneumatique selon l'une quelconque des revendications 22 à 40, dans lequel l'élastomère comprend un polymère ayant une masse moléculaire située entre 1 000 et 5 000.

42. Procédé ou pneumatique selon la revendication 41, dans lequel le polyol comprend un adipate de diols mélangés.

43. Procédé ou pneumatique selon la revendication 42, dans lequel la masse moléculaire est située entre 1 500 et 2 500.

44. Procédé ou pneumatique selon l'une quelconque des revendications 22 à 43, dans lequel l'élastomère comprend un prépolymère d'éther.

45. Procédé ou pneumatique selon l'une quelconque des revendicarions 22 à 44, dans lequel l'élastomère comprend un système de quasi-prépolymère.

46. Procédé ou pneumatique selon l'une quelconque des revendications 22 à 45, dans lequel l'élastomère comprend un produit de charge.

47. Procédé ou pneumatique selon la revendication 46, dans lequel le produit de charge est présent en une quantité située entre 2 et 60 % m/m du polyuréthane.

48. Procédé ou pneumatique selon l'une quelconque des revendications 22 à 47, dans lequel un revêtement en caoutchouc est lié à l'élastomère et est ensuite lié à un substrat en caoutchouc.

49. Procédé ou pneumatique selon la revendication 48, dans lequel le revêtement en caoutchouc comprend une gomme formant coussin réticulable.

50. Procédé ou pneumatique selon la revendication 49, dans lequel le revétement en caoutchouc comprend une solution de caoutchouc à base de solvant.

51. Procédé ou pneumatique selon l'une quelconque des revendications 27 à 50, dans lequel l'adhésif se réticule et se lie à une température située entre 80 et 130°C.

52. Procédé ou pneumatique selon l'une quelconque des revendications 22 à 51, dans lequel là réticulation et la liaison se déroulent pendant 30 min à 3 h.

53. Procédé ou pneumatique selon l'une quelconque des revendications 22 à 52, dans lequel l'élastomère est réticulé au moyen d'un catalyseur.

54. Procédé ou pneumatique selon la revendication 53, dans lequel le catalyseur comprend un complexe de métal lourd.
